# EUROPEAN PATENT SPECIFICATION

(11) **EP 4 171 967 B1**
(45) Date of publication and mention of the grant of the patent: **05.06.2024**
(21) Application number: 21737194.7
(22) Date of filing: 23.06.2021
(51) Int. Cl.: B60C 1/00, B60C 9/00, C08K 5/353, C08L 7/00

(54) **MANUFACTURING PROCESS OF A REINFORCING COMPONENT FOR A TYRE, AND RELATED MANUFACTURING PROCESS OF TYRES**
HERSTELLUNGSVERFAHREN EINER VERSTÄRKUNGSKOMPONENTE FÜR EINEN REIFEN UND ZUGEHÖRIGES HERSTELLUNGSVERFAHREN FÜR REIFEN
PROCÉDÉ DE FABRICATION D'UN COMPOSANT DE RENFORCEMENT POUR UN PNEU ET PROCÉDÉ DE FABRICATION ASSOCIÉ DE PNEUS

(30) Priority: 29.06.2020 IT 202000015664
(43) Date of publication of application: 03.05.2023
(73) Proprietor: Pirelli Tyre S.p.A., 20126 Milano (IT)
(72) Inventor: CARACINO, Paola, 20126 Milano (IT); RAMPANA, Barbara, 20126 Milano (IT); AGRESTI, Simone, 20126 Milano (IT); RICCARDI, Claudia, 20126 Milano (IT); GAIFAMI, Carlo Maria, 20126 MILANO (IT)
(74) Representative: Tirloni, Bartolomeo
(86) International application number: PCT/IT2021/050195
(87) International publication number: WO 2022/003741

(56) References cited:
- EP-A1- 1 059 346
- EP-A1- 3 074 199
- JP-A- 2012 114 138
- US-A1- 2018 294 070

## Description

### Technical field of the invention

The present invention relates to a manufacturing process of a reinforcing component for a tyre, and a related manufacturing process of tyres comprising such reinforcing component.

### State of the art

A tyre for vehicle wheel typically comprises reinforcing components, comprising elongated elements (e.g., cords) and an elastomeric compound which incorporates the elongated elements.

Typically, these reinforcing components can be, for example, one or more layers that make the carcass structure and/or the belt structure of the tyre, as well as being the protective layers (chafer) or reinforcing layers (flipper) of the sidewall and of the bead structures of the tyre.

The reinforcing components typically perform different functions which can be structural, containment and/or protection, and for ensuring the integrity of these components it is advisable checking that their elongated elements tenaciously adhere to the elastomeric compound, for avoiding tearing and breakdowns of the composite material.

Typically, the materials used for making the elongated elements can be textile or metals, depending on the positioning and/or of the types and/or of the use of the tyres.

In particular, the most commonly used textile materials can be polymeric materials of natural origin such as rayon and lyocell, or alternatively synthetic materials such as aliphatic polyamides (nylon), polyesters and aromatic polyamides (generally known as aramids). These materials are selected according to the structural component in which the elongated elements will be incorporated, according to the tyre type (for two or four-wheeled vehicles, for heavy vehicles) and according to the required performance of the tyre such as HP (high performance), UHP (ultra-high performance), racing, on or off road.

The polymeric elongated elements, typically the synthetic ones, can have a wide range of elastic responses to traction (from little to very stiff, i.e., different elastic modulus), with high or relatively low or very low elongation, but they have low adhesion to the elastomeric compound (due to poor chemical affinity), which leads to duration problems and/or a decrease in the performances of the tyres.

In the tyre manufacturing sector, it is therefore known using adhesive compositions, for example the Resorcinol-Formaldehyde-Latex (RFL) composition, for favouring the adhesion between the elongated elements and the elastomeric compound and thus ensuring the performance properties of the tyre during its use.

The RFL-based adhesive compositions are applied on the polymeric elongated elements, generally by immersion in a RFL aqueous solution, i.e., a rubber latex emulsion in an aqueous solution of resorcinol and formaldehyde (or pre-condensed resin obtained by reaction between resorcin and formaldehyde).

The preparation of a RFL bath takes place in two steps. Firstly, an aqueous solution of resorcinol and formaldehyde is matured for several hours at room temperature. By adding sodium hydroxide, this mixture becomes basic. During the maturation process, a certain condensation degree of the resorcinol and of the formaldehyde occurs. Subsequently, the latex-water mixture is added to the resorcinol and formaldehyde resin solution. The latex-water quantity and its ratio can be varied for obtaining the desired RFL aqueous solution. An RFL bath has a typical solid content of about 20% by weight and a pH of about 10. The structure of the cross-linked RFL appears to consist of a continuous resin phase and dispersed latex particles.

The polymeric elongated elements thus treated can subsequently be incorporated into the elastomeric compound through calendering and extrusion processes for then being assembled together with other semi-finished products in the building of a green tyre, which is subsequently shaped and subjected to moulding and vulcanization.

Some materials, such as rayon and aliphatic polyamides, already acquire optimal properties for the adhesion with the elastomeric compound through a single immersion in an RFL-based bath (dipping, one-step process) while others, such as polyesters or aromatic polyamides, bind with greater difficulty to the elastomeric compound and therefore benefit from particular physical or chemical activating pre-treatments. For example, the polyester or aromatic polyamides elongated elements are subjected to a surface activation by pre-treatment with a first activating bath (pre-dipping, two-phase process) or by pre-treatments using ionizing rays, plasma or solvent.

In particular, the pre-treatment with a first activating bath achieves a surface pre-activation of the polymeric elongated elements by means of epoxides or isocyanates or other suitable activators, which cause the formation of reactive groups on the surface of the polymeric elongated elements able to promote a better adhesion of the RFL system to the pre-treated elongated element, and consequently considerable improvements in the adhesion of the sticky polymeric elongated elements to the elastomeric compound.

Furthermore, for further strengthening the adhesion between the elongated elements and the elastomeric compound, it is possible introducing specific additives into the compounds which will have to cover the elongated elements, said adhesion promoters generally comprising a methylene donor, such as hexa-methylene-tetramine, and a methylene acceptor, such as resorcinol. During the vulcanization step, the crosslinking of these additives allows obtaining a higher or lower adhesiveness depending on the type of elastomeric compound, adhesion promoter, polymeric material and the treatment type performed.

The RFL-based compositions, while solving the adhesion problems between elongated elements and the elastomeric compound in a more than satisfactory way, however, have some use drawbacks in the industrial field.

First of all, RFL-based compositions may present toxicity, both for humans and for the environment, due to its reactive components, i.e., resorcinol and formaldehyde, which makes it desirable a significant reduction, if not the elimination, of its use at every stage of the tyre manufacturing process.

Furthermore, the RFL compositions are not particularly stable and require a predetermined "aging" period, called maturation, for achieving a sufficient stability for the final use in the present applications, which entails an increase in the manufacturing cycle times of the tyres.

Finally, the high solids content in the RFL compositions causes a progressive deposit accumulation in the various parts of the manufacturing line of the sticky elongated elements of the tyres. These deposits, if not properly eliminated, can represent a potential pollution risk.

In the past, some alternative adhesive compositions, substantially resorcinol and formaldehyde free, have been studied and described in an attempt to overcome the aforesaid problems.

For example, documents WO2005/080481 and EP2426253 disclose compositions substantially resorcinol and formaldehyde free for making adhere polyester elongated elements to rubbers, wherein the compositions comprise at least one rubber latex, at least one epoxide and a polyfunctionalized amine cross-linking agent, in aqueous dispersion.

Document EP1818443A1 discloses a reinforcing cord for the rubber reinforcement comprising a reinforcing fiber coated with a coating layer. The coating layer comprises, as its main component, an acrylonitrile rubber and a compound containing an oxazolinic group. A manufacturing method of the reinforcing cord comprises: i) applying an aqueous solution comprising an acrylonitrile latex and a compound containing an oxazolinic group onto the reinforcing fiber, and ii) drying the applied aqueous solution for making the coating layer onto the surface of the reinforcing fiber.

Document US4460029A discloses a latex prepared by polymerization of a polymerizable oxazoline (such as 2-isopropenyl-2-oxazoline) and at least one other monomer (such as a styrene and butadiene mixture). The latex thus made is used for promoting the adhesion of a polymeric elastomer, in particular the tyres rubber, and a substrate, in particular the reinforcing cords of the tyres.

Document US20150151578A1 discloses a method of treating a textile reinforcing element comprising: exposing the reinforcing element to a plasma gas generated at room temperature by a plasma torch and to a gas comprising at least one oxidative component.

Even in presence of alternative systems such as those mentioned above, the RFL system remains to date the most widespread and effective adhesive composition for elongated elements in use in the tyre sector and, to the Applicant's knowledge, there do not seem to exist alternative systems of effective industrial applicability that achieve adhesion performances comparable to the RFL system.

US 2018/294070 A1 discloses a method of making a cord-reinforced rubber article.

### Summary of the invention

In the tyre sector, therefore, the need to, at least partially, replace the use of RFL-based compositions is particularly felt for reducing, if not eliminating, the use of toxic and/or polluting constituents in all the manufacturing steps of the tyre, as well as simplifying the stickiness procedures of the elongated elements, while providing optimal adhesion performances between elongated elements and elastomeric compound.

The Applicant has faced the problem of manufacturing more eco-compatible tyres, in particular tyres substantially resorcinol and formaldehyde free in the adhesive coating layer of the polymeric elongated element and/or in the elastomeric compounds, for reducing the environmental impact in the manufacturing of the tyres and their reinforcing components, allowing the transport in conditions as normal as possible (e.g., without having to resort to refrigeration, inert with special gases or storage in the dark) and/or limiting, if not eliminating, the solids residues accumulation in the plants.

Furthermore, the Applicant has faced the problem of manufacturing tyres comprising reinforcing components characterized by adhesion performances between the elastomeric compound and elongated elements at least comparable if not improved with respect to those conferred by the RFL-based compositions, even in severe use conditions of the tyres, and which are durable over time ensuring reliability to the tyres. Such adhesion performances resulting in a structural integrity of the tyre.

According to the Applicant, one or more of the aforesaid problems are solved by a manufacturing process of a reinforcing component for a tyre and by a related manufacturing process for tyres comprising such reinforcing component, wherein said reinforcing component comprises sticky elongated elements obtained by exposure of polymeric elongated elements to a plasma gas generated from a precursor gas comprising an oxazolinic precursor.

According to an aspect the invention relates to a manufacturing process of a reinforcing component for a tyre according to claim 1. Said process comprises:
- arranging at least one polymeric elongated element;
- coating said at least one polymeric elongated element with an adhesive coating layer for making at least one sticky elongated element;
- providing an elastomeric compound comprising at least one elastomeric polymer, at least one reinforcing filler and components capable of facilitating the vulcanization;
- (at least partially) coating said at least one sticky elongated element with said elastomeric compound,
wherein coating said at least one polymeric elongated element comprises:
- positioning said polymeric elongated element between two electrodes placed in a working chamber;
- introducing between said two electrodes an activator gas and a precursor gas comprising an oxazolinic precursor;
- generating between said two electrodes a plasma gas comprising reactive fragments of said oxazolinic precursor;
- depositing said reactive fragments on a free surface of said polymeric elongated element for making said adhesive coating layer.

According to an aspect the invention relates to a manufacturing process of tyres according to claim 10. The process comprises:
- producing at least one reinforcing component of a green tyre according to the manufacturing process according to any embodiment of the aforesaid aspect of the present invention, wherein said reinforcing component is selected in the group: reinforcing structures (chafer and/or flipper), carcass layers and belt layers;
- building the green tyre comprising said at least one reinforcing component;
- subjecting the green tyre to moulding and vulcanization for obtaining a finished tyre, wherein during said moulding and vulcanization said at least one sticky elongated element and said elastomeric compound are mutually compressed and heated for adhering said at least one sticky elongated element to said elastomeric compound

For the purposes of the present invention:
- the term "elastomeric polymer", "elastomeric material", "rubber" or "elastomer" indicates a natural or synthetic material which, after vulcanization, at room temperature can be repeatedly stretched to at least double its original length and which after removal of the tensile force returns substantially immediately and forcefully to approximately its original length (according to the definitions of the norm ASTM D1566-11 Standard terminology relating to Rubber);
- the term "elastomeric compound" indicates a compound obtainable by mixing and possible heating of at least one elastomeric polymer with at least one of the additives commonly used in the preparation of compounds for tyres.
- the term "elongated element" indicates an element having a dimension (length) much greater than the others (section). The elongated element is also called string or reinforcing cord or more simply cord;
- the term "free surface" of an elongated element indicates the coated surface of the elongated element able to adhere to the elastomeric compound when placed in contact with the elastomeric compound;
- the term "oxazolinic precursor" indicates any molecule containing an oxazolinic ring (pentagonal ring containing an oxygen atom, a nitrogen atom and three carbon atoms).

The Applicant has experimentally found that the adhesive coating layer obtained by deposition of reactive fragments of an oxazolinic precursor gives to the sticky elongated element, when coupled to the elastomeric compound, adhesion performances sufficient to ensure good adhesion between the sticky elongated elements and the elastomeric compound, without using substances that are harmful to health and/or the environment. The adhesion performances of sticky elongated elements coated according to the present invention were compared with those of sticky elongated elements coated with the known RFL-based compositions by means of tear tests (which will be better explained below) carried out subsequently to adhesion between sticky elongated element and elastomeric compound. These tests gave satisfactory results both in terms of force necessary to break the adhesion between sticky elongated elements and elastomeric compound, and in terms of quantity of elastomeric compound remaining on the sticky elongated elements at the end of the tear test, the latter being a qualitative indicator of the adhesion intensity and effectiveness between sticky elongated elements and elastomeric compound.

The Applicant has also experimentally found that the use of a plasma gas allows giving a more homogeneous distribution of the adhesive coating layer on the free surface of the polymeric elongated element with respect to the known dipping techniques. According to the Applicant, the distribution homogeneity of the adhesive coating layer helps increasing the reliability over time of the adhesion between sticky elongated element and elastomeric compound and increasing the durability and performance reliability of the tyre. Without binding to any theory, the Applicant believes that the homogeneous distribution of the adhesive coating layer allows a better distribution of the stresses along the entire development direction of the sticky elongated element when the tyre is in use, and therefore subjected to deformations. Such stresses distribution causes a lower probability that overstress points are generated along the development of the sticky elongated element with a consequent decrease in the probability of incurring in fragile and/or fatigue breakage of the sticky elongated element.

Furthermore, according to the Applicant, the use of a plasma gas allows making an adhesive coating layer that has a well-controllable and, typically, lower thickness than that obtainable with the known dipping methods.

In fact, according to the Applicant and without limiting to any theory, especially in case of flexural deformations of the composite material (i.e., sticky elongated element coupled to the elastomeric compound), an excessive thickness of the adhesive coating layer would lead to the stress's onset at the interface between sticky elongated element and elastomeric compound. Such stresses over time could cause the damage and/or the breakage of the adhesive coating layer with consequent loss of adhesion performances between sticky elongated element and elastomeric compound, and consequent decrease in the performance properties of the tyre itself. In particular, the flexural deformations to which the composite material could typically be subjected during its use, would generate compressive stresses at one face of the sticky elongated element, and tensile stresses at the opposite face of the sticky elongated element (depending on the direction in which the torque that determines the flexural deformation acts), having increasing intensity as one moves away in the radial direction from the neutral axis of the sticky elongated element, i.e. the imaginary line that ideally passes along the longitudinal axis of the sticky elongated element.

The Applicant has therefore experimentally evaluated by tests with profilometer the thickness of the adhesive coating layer obtained by coating with plasma gas, verifying how it is possible obtaining low thickness values of the adhesive coating layer with respect to those of coating layers obtained with the known dipping methods, in addition to being able to accurately control the thickness of the obtained adhesive coating layer. These low thickness values allow limiting the intensity of the aforesaid compressive and tensile stresses acting on the adhesive coating layer, reducing the possibility that detachments and/or breakages at the interface between sticky elongated element and elastomeric compound occur.

The present invention in one or more of the aforesaid aspects can have one or more of the following preferred features.

Preferably said oxazolinic precursor comprises a 2-oxazoline, more preferably selected in the group comprising: 2-isopropenyl-2-oxazoline, 2-isopropyl-2-oxazoline, 2-ethyl-2-oxazoline and 4,4 dimethyl-2-oxazoline, even more preferably 2-isopropenyl-2-oxazoline. In this way a very reactive chemical compound is used from which it is possible forming a large number of reactive fragments. For example, in the case of 2-isopropenyl-2-oxazoline this is possible thanks to the presence of numerous functional groups within the oxazolinic ring and to the presence of the isopropenyl group in position 2 of the oxazolinic ring. The presence of reactive functional groups and heteroatoms within the selected molecule leads to the formation of numerous reactive fragments which tend to deposit on the free surface of the polymeric elongated element. For example, the breakage of the oxazolinic ring at the bond between oxygen atom in position 1 and carbon atom in position 5 of the oxazolinic ring leads to the formation of isocyanate ions, and the breakage of the carbon-carbon bond between the isopropenyl group and oxazolinic ring facilitates the formation of isopropenyl ions. According to the Applicant, both the isocyanate ions and the isopropenyl ions are able to form covalent bonds with both the polymeric material of the elongated element and the elastomeric polymer of the elastomeric compound, forming bridges that allow an effective adhesion between sticky elongated element and elastomeric compound.

In alternative embodiments said oxazolinic precursor comprises one or more between: 3-oxazoline, 4-oxazoline and isoxazoline. In this way compounds having a good reaction degree are used.

Said polymeric elongated element can comprise a single polymeric yarn or, preferably, a plurality of polymeric yarns, more preferably in number greater than or equal to 2 and/or less than or equal to 4.

For the purposes of the present invention, the term "yarn" indicates a continuous filiform structural unit which can be constituted by the aggregation of a plurality (e.g., hundreds or thousands) of textile filaments (i.e., multi-filament yarn) or alternatively by a single textile thread (e.g., a hot extruded thread such as a nylon thread).

For the purposes of the present invention, the term "diameter" referring to a polymeric elongated element or a yarn (both multi-filament and mono-filament), indicates the diameter measured as prescribed by the Bisfa method (Test methods for para-aramidic yarns, 2002 edition). In the case of yarns constituted by the aggregation of a plurality of textile filaments, "diameter" means the diameter of an ideal circumference that circumscribes all the filaments which define the yarn.

For the purposes of the present invention, the term "linear density" (or "count") of an elongated element or of a yarn (both multi-filament and mono-thread) indicates the weight per unit of length of the elongated element or of the yarn. The count is measurable in dtex (grams per 10 km of length). For the measurement of the linear density reference is made to flat yarns, without twists applied in the test step or in the stranding step, according to the tests regulated by the BISFA (Bureau International pour la Standardization des Fibres Artificielles).

Preferably each polymeric yarn has a linear density greater than or equal to 300 dtex, more preferably greater than or equal to 500 dtex, even more preferably greater than or equal to 700 dtex, and/or less than or equal to 5000 dtex, more preferably less than or equal to 4200 dtex, even more preferably less than or equal to 3600 dtex. In this way it is possible providing the appropriate structural characteristics to the polymeric elongated element.

Typically, an overall linear density of the polymeric elongated element is given by a sum of the linear densities of each polymeric yarn which constitutes the polymeric elongated element.

Preferably, each polymeric yarn is made of a material selected from the following group: aliphatic polyamide fibres (for example Nylon 6, Nylon 6.6, Nylon 4.6, Nylon 4.10, Nylon 10.10, Nylon 11, Nylon 12, Nylon 6.10, Nylon 6.12), polyester fibres (e.g., polybutylene terephthalate, polyethylene terephthalate, polyethylene isophthalate), poly-aryl-ether-ketone fibres (e.g., poly-ether-ether-ketone), cellulose (e.g., rayon, lyocell), aromatic polyamides (e.g., aramids) or their mixtures.

Preferably each polymeric yarn is made of polyester, more preferably of polyethylene terephthalate (PET) and/or polyethylene-naphthalate (PEN).

In one embodiment, said polymeric yarns are made with the same material (e.g., all the yarns are made of polyester). This simplifies the manufacturing of the polymeric elongated element.

In one alternative embodiment said polymeric yarns are made of different materials (e.g., at least one yarn made of polyester and at least one other yarn made of an aromatic polyamide). In this way it is possible combining the characteristics of yarns made of different materials.

Preferably each polymeric yarn is twisted on itself (i.e., helix twisted). In this way it is possible increasing the free surface of the single polymeric yarn with respect to the case in which the polymeric yarn is used in the extended conformation.

Typically, said polymeric elongated element comprises from two to four polymeric yarns (e.g., each multi-filament), each twisted on itself, all the yarns being twisted together for making the elongated element.

Preferably said activator gas is selected in the group of noble gases and/or mixtures of noble gases, more preferably comprises, or consists of, Argon (Ar).

Preferably introducing between said two electrodes said activator gas is carried out with a volumetric flow of said activator gas greater than or equal to 1.5 ml/min, more preferably greater than or equal to 1.8 ml/min, and/or less than or equal to 3.5 ml/min, more preferably less than or equal to 3.2 ml/min.

Preferably introducing between said two electrodes said precursor gas is carried out with a mass flow greater than or equal to 2.0 SCCM, more preferably greater than or equal to 2.3 SCCM, even more preferably greater than or equal to 2.6 SCCM, and/or less than or equal to 5 SCCM, more preferably less than or equal to 4.5 SCCM, even more preferably less than or equal to 4.0 SCCM. The mass flow of the gas comprising the oxazolinic precursor is expressed in Standard Cubic Centimetres per Minute (SCCM), i.e., the gas mass that, in one minute, passes through a volume of one cubic centimetre measured under standard temperature and pressure conditions, i.e., temperature equal to 273.15 K and atmospheric pressure.

Preferably said working chamber comprises a pressure reduction system, more preferably comprises a rotary pump and/or a turbo molecular pump.

In one embodiment, previously to said introducing between said two electrodes said activator gas and said precursor gas, it is provided reducing an inner pressure of the working chamber to a pressure value less than or equal to 100 Pascal, more preferably less than or equal to 1 Pascal, even more preferably less than or equal to 0.1 Pascal. In this way it is possible limiting the contamination risk of the polymeric elongated element and/or of the gases used. In fact, such contaminations (e.g., dust and/or oxidation of the surface of the polymeric elongated element due to the contact with air and/or humidity) could lead to the screening of the free surface of the polymeric elongated element, and/or reduce the reactivity of the reactive fragments of the oxazolinic precursor causing an effectiveness reduction in the coating process. In one alternative embodiment it is provided maintaining an inner pressure of the working chamber at a value substantially equal to the atmospheric pressure. In this way the coating process is simplified and its costs are reduced.

Preferably said plasma gas is a cold plasma. "Cold plasma" means a plasma having an overall temperature (with the exception of the electrons which typically have a temperature in the order of about 20,000 K) comprised between the room temperature and about 1,000 K. In this way the coating process is simplified as no machinery and/or structures able to withstand very high temperatures are required.

Preferably generating said plasma gas is carried out by capacitive coupling between the two electrodes.

Preferably generating said plasma gas comprises applying an alternating voltage (e.g., radio-frequency), more preferably comprises applying alternating voltage pulses, to said two electrodes.

In this way the plasma gas is simply generated.

Preferably said alternating voltage pulses have each one a duration greater than or equal to 1 ms, more preferably greater than or equal to 2 ms, and/or less than or equal to 10 ms, more preferably less than or equal to 7.5 ms.

Preferably said alternating voltage pulses are applied with a frequency greater than or equal to 60 Hz, more preferably greater than or equal to 75 Hz, and/or less than or equal to 170 Hz, more preferably less than or equal to 150 Hz.

Preferably generating said plasma gas comprises supplying at least one of said two electrodes (90a, 90b) with pulses having a supplying power greater than or equal to 100 W, more preferably greater than or equal to 150 W, and/or less than or equal to 250 W, more preferably less than or equal to 220 W.

Preferably said supplying power is constant.

According to the Applicant, the generation of a plasma gas by applying alternating voltage pulses having duration and frequency within the aforesaid ranges and generated at a supplying power comprised in the respective aforesaid range allows coating the polymeric elongated element providing the appropriate adhesive characteristics to the adhesive coating layer which is formed. In fact, according to the Applicant, as the duration and frequency increase and the supplying power increases within the respective aforesaid ranges of values, there is an increase in the fragmentation of the oxazolinic precursor with consequent formation of a greater number of reactive fragments which deposit on the free surface of the polymeric elongated element, which allows giving the desired adhesive properties to the adhesive coating layer.

According to the Applicant, values of duration and frequency of the pulses and of supplying power below the respective aforesaid ranges can, under certain conditions, lead to insufficient fragmentation of the oxazolinic precursor with consequent insufficient formation of reactive fragments which can deposit on the free surface of the polymeric elongated element. Values of duration and frequency of the pulses and of supplying power above the respective aforesaid ranges can, under certain conditions, cause an excessive fragmentation of the oxazolinic precursor with consequent formation of an excessive number of reactive fragments and consequent excessive thickening of the adhesive coating layer.

Preferably, previously to said introducing between said two electrodes said activator gas and said precursor gas, it is provided pre-treating said polymeric elongated element, wherein said pre-treating said polymeric elongated element comprises:
- introducing between said two electrodes a pre-treatment gas;
- generating between said two electrodes a pre-treatment plasma.

In this way it is possible facilitating the subsequent deposition of the reactive fragments of the oxazolinic precursor on the free surface of the polymeric elongated element as reactive groups (e.g., free radicals) are formed in the material on the free surface of the polymeric elongated element. The formation of such reactive groups helps increasing the hydrophilicity of the free surface of the polymeric elongated element and consequently the subsequent deposition and adhesion of the reactive fragments. Furthermore, according to the Applicant, this pre-treatment of the polymeric elongated element prior to the coating of the polymeric elongated element helps improving the homogeneous distribution of the adhesive coating layer on the polymeric elongated element.

Preferably said pre-treatment gas is selected from the group of noble gases and/or mixtures of noble gases, more preferably comprises, or consists of, Argon (Ar).

Preferably introducing said pre-treatment gas is carried out with a volumetric flow greater than or equal to 1.5 ml/min, more preferably greater than or equal to 1.8 ml/min, and/or less than or equal to 3.5 ml/min, more preferably less than or equal to 3.2 ml/min.

Preferably said pre-treatment plasma is a cold plasma.

Preferably generating said pre-treatment plasma is carried out by capacitive coupling between the two electrodes.

Preferably generating said pre-treatment plasma comprises applying to said two electrodes an alternating voltage (e.g., radio-frequency), more preferably continuously.

Preferably said alternating voltage is applied for a time interval greater than or equal to 20 s, more preferably greater than or equal to 30 s, and/or less than or equal to 150 s, more preferably less than or equal to 120 s.

Preferably generating said pre-treatment plasma comprises supplying at least one of said two electrodes by alternating voltage at a supplying power greater than or equal to 20 W, more preferably greater than or equal to 30 W, and/or less than or equal to 180 W, more preferably less than or equal to 150 W.

Preferably said supplying power is constant.

The term "phr" used in the following, as is known in the art, means the parts by weight of a specific component of the elastomeric compound per 100 parts by weight of elastomeric polymer.

For the purposes of the present invention, the expression "substantially resorcinol free" and/or "substantially free-formaldehyde free" referred to an element or a system of elements means that said element or system of elements does not have resorcinol and/or formaldehyde content, or at most have a resorcinol and/or formaldehyde content lower than 0.5 phr, preferably lower than 0.2 phr, more preferably lower than 0.1 phr.

Preferably said elastomeric compound is substantially resorcinol free.

Preferably said at least one sticky elongated element is substantially resorcinol free.

Preferably said at least one sticky elongated element is substantially free-formaldehyde free.

In this way, the operator's health risks and/or the environmental contamination risks related to the use of resorcinol and formaldehyde are minimized, or completely eliminated.

Preferably said elastomeric polymer is selected between diene elastomeric polymers and mono-olefin elastomeric polymers, or mixtures thereof.

Preferably said elastomeric polymers are: cis-1,4-polyisoprene (natural or synthetic rubber, preferably natural rubber), 3,4-polyisoprene, poly-1,3-butadiene (in particular, highly vinyl poly-1,3 butadiene having a content of 1,2-polymerised units, from about 15% to about 85% by weight), polychloroprene, isoprene/isobutene copolymers optionally halogenated, 1,3-butadiene/acrylonitrile copolymers, 1,3-butadiene/styrene copolymers, 1,3-butadiene/isoprene copolymers, isoprene/styrene copolymers, isoprene/1,3-butadiene/styrene terpolymers; or mixtures thereof.

Preferably said mono-olefin elastomeric polymers are: ethylene copolymers with at least one alpha-olefin having from 3 to 12 carbon atoms, and optionally with a diene having from 4 to 12 carbon atoms; poly-isobutene, isobutene copolymers and at least one diene. Particularly preferred are: ethylene/propylene copolymers (EPR); ethylene/propylene/diene terpolymers (EPDM); poly-isobutene; butyl rubbers; halobutyl rubbers; or mixtures thereof.

Preferably said reinforcement filler is selected between: carbon black, silica, alumina, aluminosilicates, calcium carbonate, kaolin or mixtures thereof.

Preferably said components capable of facilitating the vulcanization comprise vulcanising agents selected for example between sulphur, or molecules containing sulphur (sulphur donors), or mixtures thereof.

Preferably said components capable of facilitating the vulcanization comprise accelerant agents selected for example between dithiocarbamates, guanidine, thiourea, thiazoles, sulfenamides, thiurams, amines, xanthates, or mixtures thereof.

Preferably said elastomeric compound comprises a methylene acceptor compound.

Preferably said methylene acceptor compound comprises a phenolic resin, more preferably a novolac.

Alternatively said methylene acceptor compound is selected between: mixtures of ortho-cresol, para-cresol and meta-cresol; polyhydroxy phenols, such as pyrogallol, and fluorine-glucinol.

Preferably said elastomeric compound comprises a methylene donor compound.

Preferably said methylene donor compound is selected between: hexamethylenetetramine (HMT); hexamethoxymethylmelamine (HMMM); paraformaldehyde; trioxane; 2-methyl-2-nitro-1-propanal; substituted melamine resins, such as N-substituted oxymethyl-melamine resins; glycoluril compounds such as tetramethoxymethyl glycoluril; urea-formaldehyde resins such as butylated urea-formaldehyde resins; or mixtures thereof, more preferably between hexamethylenetetramine (HMT) or hexamethoxymethylmelamine (HMMM).

### Brief description of the drawings

Figure 1 schematically shows an apparatus with which a polymeric elongated element can be coated for obtaining a sticky elongated element for a reinforcing component according to the present invention;
Figures 2a-2b show optical microscopy images of a polymeric elongated element at the end of a respective coating process;
Figures 3a-3b schematically show two steps of the manufacturing of samples prepared by adhesion of elastomeric compound to sticky elongated elements;
Figures 4a-4b show optical microscopy images of a respective polymeric elongated element after tear tests.

### Detailed description of some embodiments of the invention

The features and the advantages of the present invention will be further clarified by the following detailed description of some embodiments, presented by way of nonlimiting example of the present invention, with reference to the attached figures.

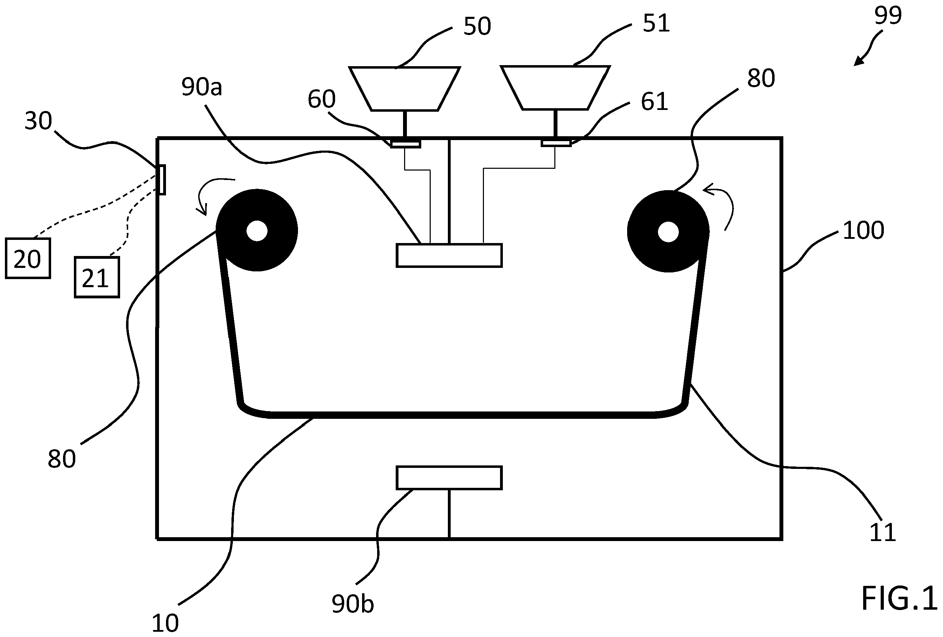

With reference to Figure 1, an apparatus 99 is schematically shown which is exemplarily suitable for implementing a coating process of a polymeric elongated element 10.

The apparatus 99 comprises a working chamber 100, exemplarily made of steel, inside of which two electrodes 90a, 90b are placed.

Inside the working chamber 100 there are two reels 80, at least one of which is motorized (actuators not shown), for the unwinding and the winding of the polymeric elongated element 10. In use, the polymeric elongated element 10 is unwound for example from the reel on the left in figure 1 for positioning it between the two electrodes 90, and it is rewound after the coating on the reel on the right in figure 1.

Exemplarily the airtight working chamber 100 comprises a pressure reduction system, exemplarily comprising a rotary pump 20 and a turbo molecular pump 21.

The two pumps 20, 21 are connected, by means of a respective connection duct (schematically shown in figure 1 by the dashed lines), to a suction valve 30 obtained on the body of the working chamber 100.

Exemplarily the apparatus 99 also comprises two distinct hermetic tanks 50 and 51 respectively for an activator gas and a precursor gas, the latter comprising an oxazolinic precursor. These tanks 50 and 51 are connected to the working chamber 100 by means of a respective line which connects them to a respective micrometric valve 60, 61. The micrometric valves 60, 61 are in turn connected to the upper electrode 90a of the working chamber, which has the plate facing the lower electrode 90b perforated for allowing the gases to escape into the space defined by the two electrodes. Preferably, the apparatus 99 comprises a further tank for a pre-treatment gas, which is associated with a respective micrometric valve connected to one or more electrodes. This further tank (and the relative valve) can be (not shown) distinct from the tanks 50 and 51, so that the pre-treatment gas can be different from the activator gas, or coincide with the tank 50 (in this case the activator gas and pre-treatment gas coincide).

In one not shown alternative embodiment there is a single hermetic tank containing a mixture of the activator gas and of the precursor gas.

The apparatus 99 is exemplarily powered by a radio-frequency powering system at 13.56 MHz (not shown) connected to the upper electrode 90a, by a semi-automatic adaptation network (not shown). For example, the radio-frequency powering is modulated in amplitude by a square wave that generates alternating voltage pulses.

In one not shown alternative embodiment the powering system is connected to the lower electrode 90b, or alternatively to both electrodes 90a, 90b.

In one not shown alternative embodiment the apparatus is powered by a pulsed and/or microwave source.

In use, one end of the polymeric elongated element 10 is unwound from the reel 80 on the left and hooked to the reel 80 on the right after placing a portion of the elongated element between the two electrodes 90a, 90b.

Subsequently, an inner pressure of the working chamber 100 is reduced. Subsequently it is exemplarily provided carrying out a pre-treatment on the polymeric elongated element 10, while the latter is continuously or step-by-step slid between the two electrodes.

The pre-treatment comprises:
- introducing between the two electrodes the pre-treatment gas (preferably fed by the tank 50);
- powering the upper electrode 90a for generating a pre-treatment plasma.

Exemplarily the pre-treatment plasma is generated by radio frequency alternating voltage (e.g., 13.56 MHz) continuously applied between the two electrodes 90a, 90b. Subsequently to the pre-treatment, the activator gas and the precursor gas comprising the oxazolinic precursor are introduced between the two electrodes 90a, 90b.

During the introduction of the gases, it is provided powering the upper electrode 90a for generating a plasma gas comprising reactive fragments of the oxazolinic precursor and depositing the reactive fragments on the free surface of the polymeric elongated element 10 while the latter is continuously or step-by-step slid between the two electrodes, for making an adhesive coating layer of the polymeric elongated element 10 and obtaining the sticky elongated element 11.

Exemplarily the plasma gas is generated by means of (radio frequency, e.g., at 13.56 MHz) alternating voltage pulses applied between the two electrodes 90a, 90b.

Exemplarily only the upper electrode 90a is powered.

In one alternative embodiment it is possible generating the plasma gas by an alternating voltage applied in a non-pulsed mode.

The Applicant has carried out some tests on samples of sticky elongated elements made according to the present invention, the results of which were compared to those of tests carried out on comparative samples of sticky elongated elements made with the known dipping methods.

The Applicant has also prepared some further samples of polymeric elongated elements (a few tens of centimetres in length) which were coupled to the elastomeric compound without any coating layer and also subjected to tear tests as explained below. In the following reference to these uncoated samples is made with the words

### 'REFERENCE EXAMPLE'.

All the above samples were prepared starting from a polymeric elongated element having the following characteristics:
- single mono-filament yarn not twisted on itself;
- material: PET;
- diameter: 0.3 mm;
- linear density: 800 dtex.

### COMPARATIVE EXAMPLE 1

The aforesaid polymeric elongated element has been subjected to a coating treatment which involves a first pre-treatment step by dipping inside a solution containing epoxides and isocyanates and a subsequent adhesive step by dipping in an RFL-based aqueous solution.

The solution of epoxides and isocyanates is prepared by mixing in aqueous solution of a weight percentage of solid elements equal to about 4%, of which 1% by weight consists of epoxides and 3% by weight consists of isocyanates.

The RFL-based aqueous solution was prepared as described below:
- step 1: preparation of a pre-condensed resin

| Ingredient | Dry Weight (phr) | Wet Weight (phr) | Dry Weight/Wet Weight (%) |
|---|---|---|---|
| Resorcinol | 9,4 | 9,4 | 100% |
| Formaldehyde | 5,1 | 13,8 | 37% |
| Sodium hydroxide | 0,7 | 7,0 | 10% |
| Water | - | 157,8 | - |

The resorcin was dissolved in water for obtaining an aqueous solution, to which formaldehyde and sodium hydroxide were added, the latter used as a condensation catalyst for creating methanol groups (called resoles) on the resorcinol, to make an intermediate solution. The intermediate solution was then mixed for 6 hours at room temperature for making the pre-condensed resin.
- step 2: preparation of the RFL-based aqueous solution starting from the pre-condensed resin

| Ingredient | Dry Weight (phr) | Wet Weight (phr) | Dry Weight/Wet Weight (%) |
|---|---|---|---|
| Formaldehyde | 1,85 | 5,0 | 37% |
| Vinyl-Pyridine-SBR latex | 84,8 | 212,0 | 40% |
| Water | - | 100,0 | - |

Firstly, the latex was dissolved in water for obtaining a latex aqueous solution. The pre-condensed resin prepared in step 1 and a further formaldehyde quantity were subsequently added to such latex aqueous solution, kept under slight stirring, for making a final mixture. The formaldehyde was added so that the wet weight ratio of formaldehyde and resorcinol was 2:1 in the final mixture. The final mixture was then left maturing for about 24 hours to favour the complete reaction of the methanol groups and to increase the viscosity of the RFL-based aqueous solution.

The polymeric elongated element was then initially immersed in the solution containing epoxides and isocyanates for a time ranging from 1 to 5 s and subsequently immersed in the RFL-based aqueous solution for a time ranging from 1 to 5 s. The samples thus coated were subjected to a drying and stabilization process by exposure to a temperature of about 225°C for about 120 s.

### COMPARATIVE EXAMPLE 2

The Applicant has carried out preliminary plasma deposition tests similarly to what is described in the following example 1 according to the invention, using, instead of the oxazolinic precursor, the furfuryl-methacrylate having formula 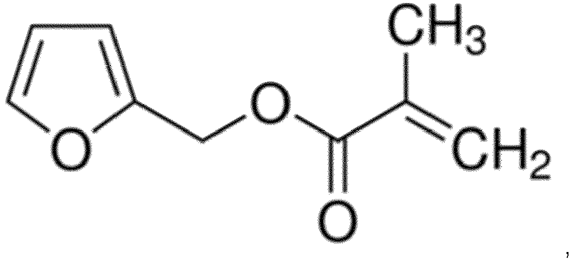 however not obtaining the desired adhesion results.

### EXAMPLE 1 (according to the present invention)

A portion of the aforesaid polymeric elongated element of about 2 meters in length was wound around a support frame in order to keep exposed some portions of the yarn, which were subjected to a coating treatment according to the present invention by exposure to the pre-treatment and coating gases.

Parameters for the pre-treatment plasma:
Inner pressure of the working chamber: 0.001 Pascal;
Pre-treatment gas: Argon;
Volumetric flow of pre-treatment gas: 2.3ml / min;
Pre-treatment plasma type: cold plasma
Application time of the alternating voltage: 120 s;
Supplying power of the upper electrode: 100 W

Parameters for the coating plasma gas:
Inner pressure of the working chamber: 0.001 Pascal;
Activator gas: Argon;
Oxazolinic precursor: 2-isopropenyl-2-oxazoline;
Volumetric flow of activator gas: 2.3 ml/min;
Mass flow of precursor gas: 3.3 SCCM
Plasma gas type: cold plasma
Duration of alternating voltage pulses: 5 ms
Frequency of alternating voltage pulses: 100 Hz
Global pulses application time: about 20 minutes;
Supplying power of the upper electrode: 175 W

The chemical structure of the chosen oxazolinic precursor is schematically shown in the figure below:

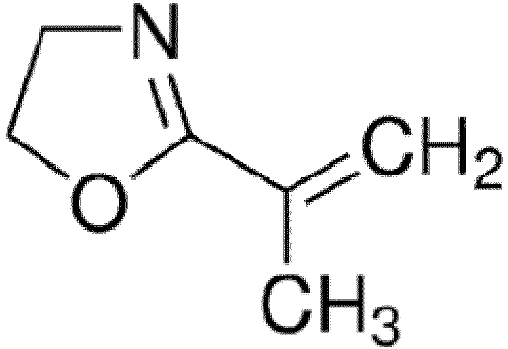

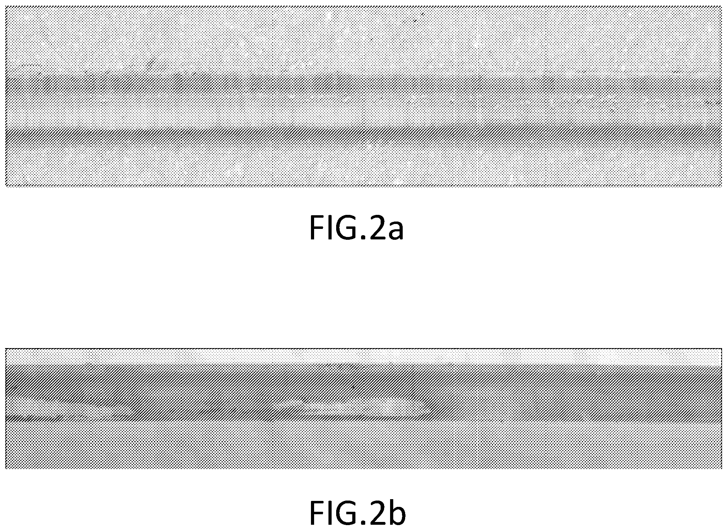

The Applicant conducted optical microscopy tests on the samples made, to evaluate the distribution homogeneity of the adhesive coating layer on the free surface of the polymeric elongated element at the end of the coating process. The microscopy tests on the samples according to Example 1 allowed to evaluate the distribution of the reactive fragments of the oxazolinic precursor on the free surface of the polymeric elongated element and to verify that these produce a well homogeneous adhesive coating layer on substantially the entire free surface of the polymeric elongated element, while the optical microscopy tests carried out on the samples according to Comparative Example 1 showed a lower distribution homogeneity. Figures 2a and 2b exemplarily show an image acquired by optical microscopy respectively on a sample according to Example 1, and on a sample according to Comparative Example 1.

Subsequently, the samples made according to Example 1, Comparative Example 1 and Reference Example were coupled to the elastomeric compound.

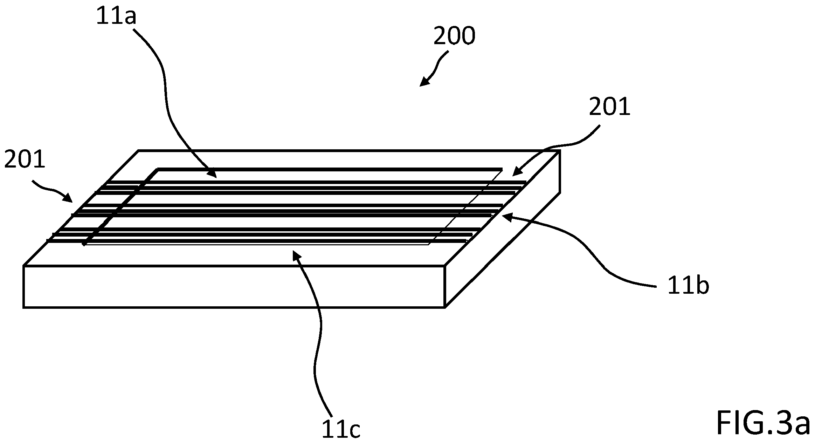

Initially, a group of three samples for each of the elements according to Example 1 (indicated in figure 3a by the reference number 11a), according to Comparative Example 1 (indicated in figure 3a by the reference number 11b) and according to Reference Example (indicated in figure 3a by the reference number 11c) have been placed inside a mould 200 (e.g., as the one schematically shown in figure 3a) and stably fixed to it inside the suited grooves 201 present at the two ends of the mould 200.

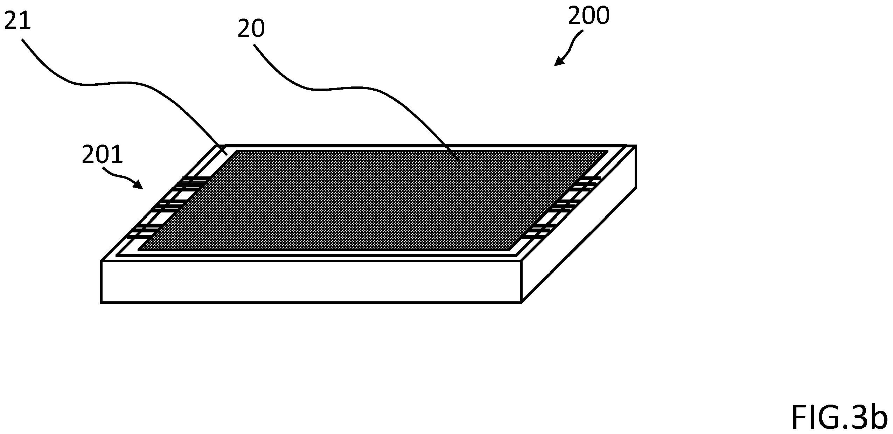

At this point, a sheet 20 of elastomeric compound (figure 3b) has been placed to cover the surface of the mould 200 between the groups of grooves 201.

### Characteristics of the elastomeric compound

| Ingredient | Quantity (phr) |
|---|---|
| Diene polymer 1: poly-1,3-butadiene (BR) | 30 |
| Diene polymer 2: cis-1,4-polyisoprene (IR) | 70 |
| Reinforcement filler: CB | 60 |
| Vulcanizing agent: S | 4 |
| Accelerating agent: N-tert-butyl-2-benzothiazylsulfenamide | 6 |
| Methylene acceptor (novolac) | 2 |
| Methylene donor: hexa-methoxymethyl-melamine (HMMM) | 1 |

Once placed on the mould 200, the sheet 20 of elastomeric compound was covered with a sheet of Mylar 21 and the mould 200 was placed inside a press (not shown).

At this point the press was closed and the elastomeric compound was vulcanized to allow the adhesion of the samples to the elastomeric compound.

### Vulcanization parameters:

- Pressure: 30 bars;
- Temperature: 150°C;
- Vulcanization time: 30 minutes.

At the end of the vulcanization process, the mould 200 was removed from the press and three samples coated with elastomeric compound, each 300 mm long, were cut out for each of the three groups of samples. Each sample was then subjected to conditioning for about 20 hours at room temperature in relative humidity conditions equal to about 65%.

At the end of the conditioning, tear tests were carried out on the obtained samples, with which two parameters were evaluated:
- the maximum pull-out force between the elastomeric compound and the sticky elongated element;
- the residual amount of elastomeric compound on the surface of the sticky elongated element at the end of the tear test, expressed as the coverage degree of the surface of the sticky elongated element. The coverage degree was assessed by optical microscopy tests by assigning a grade according to Table 1.

**Table 1**

| GRADE | COVERAGE DEGREE |
|---|---|
| 5 | 100% |
| 4 | Up to 75 % |
| 3 | Up to 50% |
| 2 | Up to 25% |
| 1 | 0% |

The maximum grade of 5 indicates an excellent adhesion between the elastomeric compound and the sticky elongated elements which, after tearing, remain completely covered with compound residues. On the contrary, a grade of 1 indicates a bad adhesion and the total removal of the elastomeric compound from the surface of the sticky elongated elements after the tearing.

Table 2 shows the results of the tearing tests in which the values of average force, minimum force and maximum force expressed in Newton are expressed, and the evaluation of the coverage degree expressed according to the scale shown in Table 1:

**Table 2**

| TREATMENT TYPE | AVERAGE FORCE | MINIMUM FORCE | MAXIMUM FORCE | COVERAGE DEGREE |
|---|---|---|---|---|
| Reference Example | 3,00 | 2,15 | 4,21 | 0 |
| Comparative Example 1 | 19,70 | 16,35 | 20,01 | 3 |
| Example 1 | 14,30 | 13,45 | 16,05 | 4 |

As can be seen from Table 2, the maximum force values for breaking the adhesion between elastomeric compound and sticky elongated elements obtained according to Example 1 are equal to about 80% of the values obtained for breaking the adhesion between elastomeric compound and sticky elongated elements obtained according to Comparative Example 1. These values are considered sufficient to entail a good adhesion quality between sticky elongated element and elastomeric compound with the advantage that sticky elongated elements obtained according to Example 1 are not toxic for the operators and/or the environment, have greater stability and significantly limit the pollution of the manufacturing line of the sticky elongated elements.

Furthermore, from Table 2 it is possible to note that:
- the difference between the maximum force and minimum force values for Example 1 is lower than the corresponding difference for Comparative Example 1, and
- the average force value measured for Example 1 appears to be more centred in the interval defined by the respective maximum force and minimum force values compared to what happens for the average force value measured for Comparative Example 1.

These results could reflect a better distribution homogeneity of the adhesive coating layer over the entire free surface of polymeric elongated elements coated with the process according to the invention compared to the traditional RFL process.

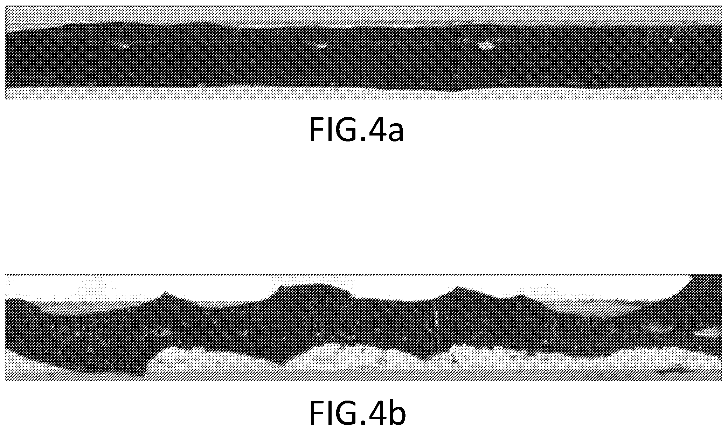

As regards the evaluation of the coverage degree, it was observed that on sticky elongated elements obtained according to Example 1, there is a greater surface percentage covered with elastomeric compound residues at the end of the tear test, compared to sticky elongated elements obtained according to Comparative Example 1. Figures 4a and 4b exemplarily show an image acquired by optical microscopy respectively on a sample according to Example 1, and on a sample according to Comparative Example 1 after tear test.

The above-described tear tests were carried out on samples prepared starting from polymeric elongated elements comprising a single monofilament yarn, for testing the adhesion between sticky elongated elements and elastomeric compound in the greater criticality condition of adhesion, as the free surface of the polymeric elongated element is minimized for the same linear density.

However, the present invention can be applied to any polymeric elongated element 10, for example as described in WO2014091429A1 or in WO2020026178A1 of the same Applicant.

In the tyres manufacturing, the sticky elongated element 11 is coupled to the elastomeric compound, for example according to known technique, for making a reinforcing component for a tyre.

An example of a reinforcing component for a tyre made with the present invention can be a carcass layer, a belt layer (crossed or zero degree), and/or a reinforcement structure (chafer and/or flipper). The conformation, position and function of such reinforcing components are for example described in patent no. WO2014091429A1 of the same Applicant.

Once the green tyre has been formed or built, it is subjected to moulding and vulcanization for obtaining the finished tyre. During this step, the vulcanization of the elastomeric compound of the aforesaid reinforcing component is also carried out, with the consequent adhesion between sticky elongated elements and elastomeric compound.

## Claims

1. Manufacturing process of a reinforcing component for a tyre, said process comprising:
- arranging at least one polymeric elongated element (10);
- coating said at least one polymeric elongated element (10) with an adhesive coating layer for making at least one sticky elongated element (11);
- providing an elastomeric compound comprising at least one elastomeric polymer, at least one reinforcing filler and components capable of facilitating the vulcanization;
- coating said at least one sticky elongated element (11) with said elastomeric compound,
wherein coating said at least one polymeric elongated element (10) comprises:
- positioning said polymeric elongated element (10) between two electrodes (90a, 90b) placed in a working chamber (100);
- introducing between said two electrodes (90a, 90b) an activator gas and a precursor gas comprising an oxazolinic precursor;
**characterized in that** coating said at least one polymeric elongated element (10) comprises:
- generating between said two electrodes a plasma gas comprising reactive fragments of said oxazolinic precursor;
- depositing said reactive fragments on a free surface of said polymeric elongated element (10) for making said adhesive coating layer.

2. Process according to claim 1, wherein said oxazolinic precursor comprises a molecule selected in the group: 2-oxazoline, 3-oxazoline, 4-oxazoline and isoxazoline.

3. Process according to claim 1, wherein said oxazolinic precursor comprises a 2-oxazoline, preferably selected in the group: 2-isopropenyl-2-oxazoline, 2-isopropyl-2-oxazoline, 2-ethyl-2-oxazoline and 4,4 dimethyl-2-oxazoline.

4. Process according to any one of the previous claims, wherein said plasma gas is a cold plasma, wherein generating said plasma gas comprises applying alternating voltage pulses to said two electrodes (90a, 90b), wherein said alternating voltage pulses have each one a duration greater than or equal to 1 ms and/or less than or equal to 10 ms, wherein said alternating voltage pulses are applied with a frequency greater than or equal to 60 Hz and/or less than or equal to 170 Hz, wherein generating said plasma gas comprises supplying at least one of said two electrodes (90a, 90b) with pulses having a supplying power greater than or equal to 100 W and/or less than or equal to 250 W, and wherein said supplying power is constant.

5. Process according to any one of the previous claims, wherein said activator gas is selected in the group of noble gases and/or mixtures of noble gases, wherein introducing between said two electrodes (90a, 90b) said activator gas is carried out with a volumetric flow of said activator gas greater than or equal to 1.5 ml/min and/or less than or equal to 3.5 ml/min, and wherein introducing between said two electrodes (90a, 90b) said precursor gas is carried out with a mass flow greater than or equal to 2.0 SCCM and/or less than or equal to 5 SCCM and wherein, previously to said introducing between said two electrodes (90a, 90b) said activator gas and said precursor gas, it is provided reducing an inner pressure of the working chamber to a pressure value less than or equal to 100 Pascal.

6. Process according to any one of the previous claims, comprising, previously to said introducing between said two electrodes said activator gas and said precursor gas, pre-treating said polymeric elongated element (10), wherein said pre-treating said polymeric elongated element (10) comprises:
- introducing between said two electrodes (90a, 90b) a pre-treatment gas;
- generating between said two electrodes (90a, 90b) a pre-treatment plasma,
wherein said pre-treatment gas is selected in the group of noble gases and/or mixtures of noble gases, wherein introducing said pre-treatment gas is carried out with a volumetric flow greater than or equal to 1.5 ml/min and/or less or equal to 3.5 ml/min, wherein said pre-treatment plasma is a cold plasma, wherein generating said pre-treatment plasma comprises applying to said two electrodes (90a, 90b) an alternating voltage continuously for a time interval greater than or equal to 20 s and/or less than or equal to 150 s, and wherein generating said pre-treatment plasma comprises supplying at least one of said two electrodes (90a, 90b) by alternating voltage at a constant supplying power greater than or equal to 20 W and/or less than or equal to 180 W.

7. Process according to any one of the previous claims, wherein said polymeric elongated element (10) comprises from two to four polymeric yarns, each twisted on itself, all the yarns being twisted together for making the elongated element (10), wherein each polymeric yarn has a linear density greater than or equal to 300 dtex and/or less than or equal to 5000 dtex, wherein each polymeric yarn is made of a material selected in the following group: aliphatic polyamide fibres, polyester fibres, poly-aryl-ether-ketone fibres, cellulose, aromatic polyamides or their mixtures, and wherein said polymeric yarns are made with a same material or with different materials.

8. Process according to any one of the previous claims, wherein said elastomeric compound is substantially resorcinol free, wherein said at least one sticky elongated element (11) is substantially resorcinol free, and wherein said at least one sticky elongated element (11) is substantially free-formaldehyde free.

9. Process according to any one of the previous claims, wherein said at least one elastomeric polymer is selected between diene elastomeric polymers, mono-olefin elastomeric polymers, or mixtures thereof, wherein said at least one reinforcing filler is selected between: carbon black, silica, alumina, aluminosilicates, calcium carbonate, kaolin or their mixtures, wherein said components capable of facilitating the vulcanization comprise vulcanizing agents and accelerating agents, wherein said elastomeric compound comprises a methylene acceptor compound comprising a phenolic resin, wherein said elastomeric compound comprises a methylene donor compound selected between hexa-methylen-tetramine (HMT) or hexa-methoxymethyl-melamine (HMMM).

10. Manufacturing process of tyres comprising:
- producing at least one reinforcing component of a green tyre according to the manufacturing process according to any of the previous claims, wherein said reinforcing component is selected in the group: reinforcing structures, carcass layers and belt layers;
- building the green tyre comprising said at least one reinforcing component;
- subjecting the green tyre to moulding and vulcanization for obtaining a finished tyre, wherein during said moulding and vulcanization said at least one sticky elongated element (11) and said elastomeric compound are mutually compressed and heated for adhering said at least one sticky elongated element (11) to said elastomeric compound.

## Patentansprüche

1. Herstellungsverfahren einer Verstärkungskomponente für einen Reifen, wobei das Verfahren umfasst:
- Anordnen wenigstens eines länglichen Polymerelements (10) ;
- Beschichten des wenigstens einen länglichen Polymerelements (10) mit einer Klebstoffbeschichtungsschicht, um wenigstens ein klebriges längliches Element (11) herzustellen;
- Bereitstellen einer elastomere Verbindung, die wenigstens ein elastomeres Polymer, wenigstens einen Verstärkungsfüllstoff und Komponenten umfasst, die die Vulkanisation erleichtern können:
- Beschichten des wenigstens einen klebrigen länglichen Elements (11) mit der elastomeren Verbindung,
wobei die Beschichtung des wenigstens einen länglichen Polymerelements (10) umfasst:
- Positionieren des länglichen Polymerelements (10) zwischen zwei Elektroden (90a, 90b), die in einer Arbeitskammer (100) platziert sind;
- Einführen eines Aktivatorgases und eines Vorläufergases, das einen Oxazolinvorläufer umfasst, zwischen die zwei Elektroden (90a, 90b);
**dadurch gekennzeichnet, dass** die Beschichtung des wenigstens einen länglichen Polymerelements (10) umfasst:
- Erzeugen eines Plasmagases, das reaktive Fragmente des Oxazolinvorläufers umfasst, zwischen den zwei Elektroden;
- Abscheiden der reaktiven Fragmente auf einer freien Oberfläche des länglichen Polymerelements (10) zum Herstellen der Klebstoffbeschichtungsschicht.

2. Verfahren nach Anspruch 1, wobei der Oxazolinvorläufer ein Molekül umfasst, das aus der Gruppe ausgewählt ist: 2-Oxazolin, 3-Oxazolin, 4-Oxazolin und Isoxazolin.

3. Verfahren nach Anspruch 1, wobei der Oxazolinvorläufer ein 2-Oxazolin umfasst, das vorzugsweise aus der Gruppe ausgewählt ist: 2-Isopropenyl-2-oxazolin, 2-Isopropyl-2-oxazolin, 2-Ethyl-2-oxazolin und 4,4-Dimethyl-2-oxazolin.

4. Verfahren nach einem der vorhergehenden Ansprüche, wobei das Plasmagas ein kaltes Plasma ist, wobei das Erzeugen des Plasmagases das Anlegen von Wechselspannungsimpulsen an die zwei Elektroden (90a, 90b) umfasst, wobei die Wechselspannungsimpulse jeweils eine Dauer von größer oder gleich 1 ms und/oder kleiner oder gleich 10 ms aufweisen, wobei die Wechselspannungsimpulse mit einer Frequenz größer oder gleich 60 Hz und/oder kleiner oder gleich 170 Hz angelegt werden, wobei das Erzeugen des Plasmagases das Versorgen wenigstens einer der zwei Elektroden (90a, 90b) mit Impulsen mit einer Versorgungsleistung größer oder gleich 100 W und/oder kleiner oder gleich 250 W umfasst und wobei die Versorgungsleistung konstant ist.

5. Verfahren nach einem der vorhergehenden Ansprüche, wobei das Aktivatorgas aus der Gruppe der Edelgase und/oder der Edelgasgemische ausgewählt ist, wobei das Einführen des Aktivatorgases zwischen die zwei Elektroden (90a, 90b) mit einem Volumenstrom des Aktivatorgases von größer oder gleich 1,5 ml/min und/oder kleiner oder gleich 3,5 ml/min durchgeführt wird, und wobei das Einführen des Vorläufergases zwischen die zwei Elektroden (90a, 90b) mit einem Massenstrom von mehr als oder gleich 2,0 SCCM und/oder weniger als oder gleich 5 SCCM durchgeführt wird, und wobei es vor dem Einführen des Aktivatorgases und des Vorläufergases zwischen die zwei Elektroden (90a, 90b) vorgesehen ist, einen Innendruck der Arbeitskammer auf einen Druckwert von weniger als oder gleich 100 Pascal zu reduzieren.

6. Verfahren nach einem der vorhergehenden Ansprüche, das vor dem Einführen des Aktivatorgases und des Vorläufergases zwischen die zwei Elektroden ein Vorbehandeln des länglichen Polymerelements (10) umfasst, wobei das Vorbehandeln des länglichen Polymerelements (10) umfasst:
- Einführen eines Vorbehandlungsgases zwischen die zwei Elektroden (90a, 90b);
- Erzeugen eines Vorbehandlungsplasmas zwischen den zwei Elektroden (90a, 90b), wobei das Vorbehandlungsgas aus der Gruppe der Edelgase und/oder Edelgasgemische ausgewählt ist, wobei das Einführen des Vorbehandlungsgases mit einem Volumenstrom von mehr als oder gleich 1,5 ml/min und/oder weniger als oder gleich 3,5 ml/min durchgeführt wird, wobei das Vorbehandlungsplasma ein kaltes Plasma ist, wobei das Erzeugen des Vorbehandlungsplasmas das kontinuierliche Anlegen einer Wechselspannung an die zwei Elektroden (90a, 90b) für ein Zeitintervall größer oder gleich 20 s und/oder kleiner oder gleich 150 s umfasst, und wobei das Erzeugen des Vorbehandlungsplasmas das Versorgen wenigstens einer der zwei Elektroden (90a, 90b) mit Wechselspannung bei einer konstanten Versorgungsleistung größer oder gleich 20 W und/oder kleiner oder gleich 180 W umfasst.

7. Verfahren nach einem der vorhergehenden Ansprüche, wobei das längliche Polymerelement (10) zwei bis vier Polymergarne umfasst, von denen jedes auf sich selbst gedreht ist, wobei alle Garne zusammen gedreht sind, um das längliche Element (10) herzustellen, wobei jedes Polymergarn eine lineare Dichte von größer oder gleich 300 dtex und/oder kleiner oder gleich 5000 dtex aufweist, wobei jedes Polymergarn aus einem Material hergestellt ist, das aus der folgenden Gruppe ausgewählt ist: aliphatische Polyamidfasern, Polyesterfasern, Polyaryletherketonfasern, Cellulose, aromatische Polyamide oder deren Gemische, und wobei die Polymergarne aus demselben Material oder aus verschiedenen Materialien hergestellt sind.

8. Verfahren nach einem der vorhergehenden Ansprüche, wobei die elastomere Verbindung im Wesentlichen frei von Resorcin ist, wobei das wenigstens eine klebrige längliche Element (11) im Wesentlichen frei von Resorcin ist, und wobei das wenigstens eine klebrige längliche Element (11) im Wesentlichen frei von freien Aldehyden ist.

9. Verfahren nach einem der vorhergehenden Ansprüche, wobei das wenigstens eine elastomere Polymer aus elastomeren DienPolymeren, elastomeren Mono-Olefin-Polymeren oder Gemischen davon ausgewählt ist, wobei der wenigstens eine Verstärkungsfüllstoff ausgewählt ist aus: Ruß, Siliciumdioxid, Aluminiumoxid, Aluminiumsilikaten, Calciumcarbonat, Kaolin oder deren Gemischen, wobei die Komponenten, die in der Lage sind, die Vulkanisation zu erleichtern, Vulkanisationsmittel und Beschleunigungsmittel umfassen, wobei die elastomere Verbindung eine Methylenakzeptorverbindung umfasst, die ein Phenolharz umfasst, wobei die elastomere Verbindung eine Methylendonorverbindung umfasst, die aus Hexa-Methylentetramin (HMT) oder Hexa-Methoxymethyl-Melamin (HMMM) ausgewählt ist.

10. Herstellungsverfahren von Reifen, umfassend:
- Produzieren wenigstens einer Verstärkungskomponente eines Reifenrohlings gemäß dem Herstellungsverfahren nach einem der vorhergehenden Ansprüche, wobei die Verstärkungskomponente aus der Gruppe der Verstärkungsstrukturen, Reifenunterbauschichten und Gürtelschichten ausgewählt wird;
- Aufbauen des Reifenrohlings, der die wenigstens eine Verstärkungskomponente umfasst;
- Unterziehen des Reifenrohlings dem Formen und Vulkanisieren, um einen fertigen Reifen zu erhalten, wobei während des Formens und Vulkanisierens das wenigstens eine klebrige längliche Element (11) und das elastomere Gemisch gegenseitig komprimiert und erhitzt werden, um das wenigstens eine klebrige längliche Element (11) an dem elastomeren Gemisch anzukleben.

## Revendications

1. Procédé de fabrication d'un élément de renfort pour pneumatique, ledit procédé comprenant les étapes consistant à :
- disposer au moins un élément allongé polymère (10) ;
- revêtir ledit au moins un élément allongé polymère (10) d'une couche de revêtement adhésif pour fabriquer au moins un élément allongé collant (11) ;
- fournir un composé élastomère comprenant au moins un polymère élastomère, au moins une charge renforçante et des composants capables de faciliter la vulcanisation :
- revêtir ledit au moins un élément allongé collant (11) avec ledit composé élastomère,
dans lequel le revêtement dudit au moins un élément allongé polymère (10) comprend les étapes consistant à :
- positionner ledit élément polymère allongé (10) entre deux électrodes (90a, 90b) placées dans une chambre de travail (100) ;
- introduire entre lesdites deux électrodes (90a, 90b) un gaz activateur et un gaz précurseur comprenant un précurseur oxazolinique ;
**caractérisé en ce que** le revêtement dudit au moins un élément allongé polymère (10) comprend les étapes consistant à :
- générer entre lesdites deux électrodes un plasma gazeux comprenant des fragments réactifs dudit précurseur oxazolinique ;
- déposer lesdits fragments réactifs sur une surface libre dudit élément polymère allongé (10) pour réaliser ladite couche de revêtement adhésif.

2. Procédé selon la revendication 1, **caractérisé en ce que** ledit précurseur oxazolinique comprend une molécule choisie dans le groupe : 2-oxazoline, 3-oxazoline, 4-oxazoline et isoxazoline.

3. Procédé selon la revendication 1, dans lequel ledit précurseur oxazolinique comprend une 2-oxazoline, de préférence choisie dans le groupe : 2-isopropényl-2-oxazoline, 2-isopropyl-2-oxazoline, 2-éthyl-2-oxazolme et 4,4 diméthyl-2-oxazoline.

4. Procédé selon l'une quelconque des revendications précédentes, dans lequel ledit plasma gazeux est un plasma froid, dans lequel la génération dudit gaz plasmatique comprend l'application d'impulsions de tension alternative auxdites deux électrodes (90a, 90b), dans lequel lesdites impulsions de tension alternative ont chacune une durée supérieure ou égale à 1 ms et/ou inférieure ou égale à 10 ms dans lequel lesdites impulsions de tension alternative sont appliquées avec une fréquence supérieure ou égale à 60 Hz et/ou inférieure ou égale à 170 Hz, dans lequel la génération dudit plasma gazeux comprend l'alimentation d'au moins une desdites deux électrodes (90a, 90b) avec des impulsions ayant une puissance d'alimentation supérieure ou égale à 100 W et/ou inférieure ou égale à 250 W, et dans lequel ladite puissance d'alimentation est constante.

5. Procédé selon l'une quelconque des revendications précédentes, dans lequel ledit gaz activateur est choisi dans le groupe des gaz rares et/ou des mélanges de gaz rares, dans lequel l'introduction entre lesdites deux électrodes (90a, 90b) dudit gaz activateur est réalisée avec un débit volumétrique dudit gaz activateur supérieur ou égal à 1,5 ml/min et/ou inférieur ou égal à 3,5 ml/min, et dans lequel l'introduction entre lesdites deux électrodes (90a, 90b) dudit gaz précurseur s'effectue avec une masse débit supérieur ou égal à 2,0 SCCM et/ou inférieur ou égal à 5 SCCM et dans lequel, préalablement à ladite introduction entre lesdites deux électrodes (90a, 90b) ledit gaz activateur et ledit gaz précurseur, il est prévu de réduire une pression interne de la chambre de travail à une valeur de pression inférieure ou égale à 100 Pascal.

6. Procédé selon l'une quelconque des revendications précédentes, comprenant, préalablement à ladite introduction entre lesdites deux électrodes ledit gaz activateur et ledit gaz précurseur, un prétraitement dudit élément allongé polymère (10), dans lequel ledit prétraitement dudit élément allongé polymère (10) comprend les étapes consistant à :
- introduire entre lesdites deux électrodes (90a, 90b) un gaz de prétraitement ;
- générer entre lesdites deux électrodes (90a, 90b) un plasma de prétraitement, dans lequel ledit gaz de prétraitement est choisi dans le groupe des gaz rares et/ou des mélanges de gaz rares, dans lequel l'introduction dudit gaz de prétraitement est effectuée avec un débit volumétrique supérieur ou égal à 1,5 ml/min et/ou inférieur ou égal à 3,5 ml/min, dans lequel ledit plasma de prétraitement est un plasma froid, dans lequel la génération dudit plasma de prétraitement comprend l'application sur lesdites deux électrodes (90a, 90b) d'une tension alternative en continu pendant un intervalle de temps supérieur ou égal à 20 s et/ou inférieur ou égal à 150 s, et dans lequel la génération dudit plasma de prétraitement comprend l'alimentation d'au moins une desdites deux électrodes (90a, 90b) par tension alternative à puissance d'alimentation constante supérieure ou égale à 20 W et/ou inférieure ou égale à 180 W.

7. Procédé selon l'une quelconque des revendications précédentes, dans lequel ledit élément allongé polymère (10) comprend de deux à quatre fils polymères, chacun torsadé sur lui-même, tous les fils étant torsadés ensemble pour réaliser l'élément allongé (10), dans lequel chaque fil polymère a une densité linéaire supérieure ou égale à 300 dtex et/ou inférieure ou égale à 5000 dtex, dans lequel chaque fil polymère est constitué d'un matériau choisi dans le groupe suivant : fibres de polyamide aliphatique, fibres de polyester, fibres poly-aryl-éther-cétone, cellulose, polyamides aromatiques ou leurs mélanges, et dans lequel lesdits fils polymères sont fabriqués avec un même matériau ou avec des matériaux différents.

8. Procédé selon l'une quelconque des revendications précédentes, dans lequel ledit composé élastomère est sensiblement exempt de résorcinol, dans lequel ledit au moins un élément allongé collant (11) est sensiblement exempt de résorcinol, et dans lequel ledit au moins un élément allongé collant (11) est pratiquement exempt d'aldéhyde de forme libre.

9. Procédé selon l'une quelconque des revendications précédentes, dans lequel ledit au moins un polymère élastomère est choisi parmi les polymères élastomères diéniques, les polymères élastomères mono-oléfiniques, ou leurs mélanges, dans lequel ladite au moins une charge renforçante est choisie entre : le noir de carbone, de la silice, de l'alumine, des aluminosilicates, du carbonate de calcium, du kaolin ou leurs mélanges, dans lequel lesdits composants capables de faciliter la vulcanisation comprennent des agents de vulcanisation et des agents accélérateurs, dans lequel ledit composé élastomère comprend un composé accepteur de méthylène comprenant une résine phénolique, dans lequel ledit composé élastomère comprend un composé méthylène composé donneur choisi entre l'hexa-méthylène-tétramine (HMT) ou l'hexa-méthoxyméthyl-mélamine (HMMM).

10. Procédé de fabrication de pneumatiques comprenant les étapes consistant à :
- produire au moins un composant de renforcement d'un pneumatique cru selon le procédé de fabrication selon l'une quelconque des revendications précédentes, dans lequel ledit composant de renforcement est choisi dans le groupe : structures de renforcement, couches de carcasse et couches de ceinture ;
- construire le pneumatique cru comprenant ledit au moins un composant de renforcement ;
- soumettre le pneumatique cru à un moulage et à une vulcanisation pour obtenir un pneumatique fini, dans lequel pendant ledit moulage et ladite vulcanisation ledit au moins un élément allongé collant (11) et ledit composé élastomère sont mutuellement comprimés et chauffés pour faire adhérer ledit au moins un élément allongé collant (11) audit composé élastomère.
